Europäisches Patentamt

European Patent Office

Office européen des brevets

(11) Veröffentlichungsnummer: **0 470 618 B1**

(12) **EUROPÄISCHE PATENTSCHRIFT**

(45) Veröffentlichungstag der Patentschrift: **15.11.95**

(21) Anmeldenummer: **91113339.5**

(22) Anmeldetag: **08.08.91**

(51) Int. Cl.6: **C08L 59/00**

(54) **Thermoplastische Polyoxymethylen-Formmasse mit hoher Zähigkeit und ihre Verwendung.**

(30) Priorität: **09.08.90 DE 4025219**

(43) Veröffentlichungstag der Anmeldung:
**12.02.92 Patentblatt 92/07**

(45) Bekanntmachung des Hinweises auf die
Patenterteilung:
**15.11.95 Patentblatt 95/46**

(84) Benannte Vertragsstaaten:
**AT BE CH DE DK ES FR GB GR IT LI LU NL SE**

(56) Entgegenhaltungen:
**EP-A- 0 156 285**
**EP-A- 0 181 541**
**EP-A- 0 254 477**
**EP-A- 0 390 146**
**US-A- 4 296 216**

(73) Patentinhaber: **HOECHST AKTIENGESELL-
SCHAFT**

**D-65926 Frankfurt am Main (DE)**

(72) Erfinder: **Fleischer, Dietrich, Dr.
Seitersweg 19
W-6100 Darmstadt (DE)**
Erfinder: **Schlaf, Helmut, Dr.
Zum Gimbacher Weg 20
W-6233 Kelkheim/Ts. (DE)**

**Beschreibung**

Die Erfindung bezieht sich auf thermoplastische Polyoxymethylen-Formmassen mit hoher Zähigkeit und ihre Verwendung zur Herstellung von Formkörpern.

Polyacetale werden seit langem als vielseitige Werkstoffe, vor allem im technischen Bereich, eingesetzt. Sie eignen sich wegen ihrer hervorragenden mechanischen Eigenschaften, wie hoher Steifigkeit, Härte und Festigkeit, sowie der Möglichkeit, Formteile und Formkörper in engen Toleranzgrenzen herzustellen, und der guten Beständigkeit gegenüber vielen Chemikalien vielfach als Metallersatz. Für eine Reihe von Anwendungen weisen sie allerdings aufgrund ihrer relativ hohen Glastemperatur eine zu geringe Schlagzähigkeit, insbesondere eine zu geringe multiaxiale Schlagzähigkeit, auf. Für solche Anwendungsgebiete ist es zusätzlich wünschenswert, daß die Produkte auch bei tiefen Umgebungstemperaturen ihre guten Schlagzähigkeitseigenschaften behalten.

Es sind eine Reihe von Methoden bekannt, die Zähigkeit teilkristalliner, thermoplastisch verarbeitbarer Polymerer durch Einarbeiten vernetzter oder unvernetzter, teilweise auch gepfropfter Elastomerer zu verbessern. Unter Einsatz von Polyoxymethylen sind folgende Modifikationen beschrieben worden: ein mit Polyurethan modifiziertes Polyoxymethylen (DE-B 1 193 240); ein mit einer zweiphasigen Mischung aus Polybutadien und Styrol/Acrylnitril (ABS) modifiziertes Polyoxymethylen (DE-B 1 931 392); ein mit einem auf Basis Acrylester-Butadien hergestellten Pfropfcopolymer modifiziertes Polyoxymethylen (DE-C 1 964 156); ein mit einem Polydien/Polyalkylenoxid-Blockpolymerisat modifiziertes Polyoxymethylen (DE-A 2 408 487) und schließlich ein mit modifizierten Polysiloxanen bzw. Silicon-Kautschuken ausgerüstetes Polyoxymethylen (DE-A 2 659 357). Darüber hinaus wurden für Polyoxymethylen gepfropfte Dien-Kautschuke vorgeschlagen, die eine spezifische Pfropfstruktur aufweisen (EP-A 0 156 285). Die genannten Mischungen besitzen allgemein bei Raumtemperatur verbesserte Zähigkeitsparameter, insbesondere die Kältekerbschlagzähigkeit ist bei den Mischungen der DE-A 2 659 357 und EP-A 0 156 285 wesentlich erhöht.

Es hat sich aber gezeigt, daß solche Formmassen für wichtige Anwendungen, bei denen große Deformationskräfte aufgenommen werden müssen, nicht immer voll zufriedenstellende Eigenschaftsprofile aufweisen; insbesondere wenn tiefe Temperaturen bis minus 30°C oder sogar bis minus 40°C angewandt werden.

Aus der EP-A 0 037 686 sind schlagzähe Abmischungen von harten thermoplastischen Kunststoffen, einem kautschukelastischen Elastomeren und einer die Verteilung des Elastomeren in der Kunststoffmatrix begünstigenden Komponente bekannt. Bei der Elastomerkomponente handelt es sich um Pfropfcopolymerisate mit Kern-Hüllen-Struktur beispielsweise mit Styrol und Methylmethacrylat (MBS) bzw. mit Styrol/Acrylnitril (ABS) gepfropftes Polybutadien. Polyoxymethylen wird in dieser Literaturstelle als Polymermatrix nicht erwähnt. Gleiches gilt auch für die EP-A 0 079 477, die Formmassen mit verbesserter Tieftemperatur-Schlagzähigkeit aus Polyestern und einer Schlagzähkomponente u.a. mit Kern-Hüllen-Struktur zum Gegenstand hat. Die Hülle der Partikel der Schlagzähkomponente kann dabei aus mehreren Schalen unterschiedlicher stofflicher Zusammensetzung aufgebaut sein. Als zwingenden Bestandteil enthält die Schlagzähkomponente u.a. Polycarbonat.

Die Aufgabe der vorliegenden Erfindung war es daher, schlagzäh modifiziertes Polyoxymethylen bereitzustellen, das bei Temperaturen bis ca. minus 40°C gegenüber bisher bekannten Systemen wesentlich verbesserte Zähigkeitsparameter im mehraxialen Durchstoßtest aufweist, ohne daß dabei die ursptunglichen, vorteilhaften Eigenschaften des Polyoxymethylens, wie gute Witterungs- und Alterungsbeständigkeit, hohe Oberflächengüte, vorteilhafte thermoplastische Verarbeitbarkeit wesentlich beeinträchtigt werden. Es war weiterhin erwünscht, kostengünstige, halogenfreie Schlagzähkomponenten einzusetzen.

Es wurde gefunden, daß sich diese Aufgabe dadurch lösen läßt, daß als Schlagzähkomponente Pfropfcopolymere aus einem kautschukelastischen, einphasigen Kern auf Basis von Polydien mit einer bimodalen Teilchengrößenverteilung sowie einer harten Pfropfhülle (Kern-Hüllen-Struktur) eingesetzt werden.

Die Erfindung betrifft daher thermoplastische Formmassen aus

A. 50 bis 95 Gew.-% Polyoxymethylen

B. 5 bis 50 Gew.-% eines kautschukelastischen Pfropfcopolymeren, das eine bimodale Teilchengrößenverteilung aufweist,

jeweils bezogen auf die Summe der Komponenten A) und B) und gegebenenfalls üblichen Zusatzstoffen, wobei Komponente B) aus $\alpha$) einem kautschukelastischen, wenigstens teilweise vernetzten Kern auf Basis mindestens eines Polydiens mit Teilchendurchmessern von 0,05 bis 1 $\mu$m, dem folgende Kautschuke zugrunde liegen:

a) 15 - 85, vorzugsweise 30 - 70, insbesondere 35 - 60 Gew.-% (bezogen auf die Summe a + b) eines Kautschuklatex mit einem mittleren Teilchendurchmesser $d_{50}$ von 0,05-0,2, vorzugsweise 0,08-0,15 $\mu$m,

EP 0 470 618 B1

und

b) 85 - 15, vorzugsweise 70 - 30, insbesondere 65 - 35 Gew.-% (bezogen auf die Summe a + b) eines Kautschuklatex mit einem mittleren Teilchendurchmesser $d_{50}$ von 0,2 - 1, vorzugsweise 0,25 - 0,8, insbesondere 0,3 - 0,6 $\mu$m, mit der Maßgabe,

daß $d_{50}$ von (b) um den Faktor 1,5 - 8, vorzugsweise 2,7-5, insbesondere 3 - 4,5, größer ist als $d_{50}$ von (a),

der Quotient Q = $(d_{90} - d_{10})/d_{50}$ der einzelnen Kautschuke jeweils höchstens 2, vorzugsweise höchstens 1,8, insbesondere höchstens 0,8 ist,

und die Differenz $d_{10}$ (b) minus $d_{90}$ (a) 0,01 bis minus 0,10, vorzugsweise Null bis minus 0,08, insbesondere Null bis minus 0,05 beträgt

und $\beta$) mindestens einer harten Pfropfhülle aus wenigstens einem Vinylmonomeren aus der Reihe Styrol, (Meth)Acrylnitril und Methylenmethacrylat besteht.

Wie erwähnt, liegen die Primärteilchen des Pfropfcopolymeren B) in der Polyoxymethylenmatrix in bimodaler Verteilung vor.

Für die Pfropfhülle bevorzugt werden Kombinationen aus Styrol/Acrylnitril oder Styrol und Methylmethacrylat. Der Teilchendurchmesserbereich des Polydienkerns beträgt im allgemeinen 0,05 bis 1 $\mu$m, vorzugsweise 0,06 bis 0,8 $\mu$m.

Die Gewichtsangaben der Kautschuklatices a) und b) sind jeweils auf Feststoff bezogen.

Dabei kann man zur Herstellung des Pfropfproduktes B) entweder einen Kautschuklatex entsprechend a) und einen Kautschuklatex entsprechend b) in dem angegebenen Mengenverhältnis mischen und die Vinylmonomeren auf dieses Gemisch pfropfpolymerisieren oder die Vinylmonomeren auf einen Kautschuklatex entsprechend a) und auf einen Kautschuklatex entsprechend b) getrennt voneinander pfropfpolymerisieren und die beiden Pfropfprodukte (entweder als Latices mit nachfolgender gemeinsamer Fällung oder als bereits vorhandene Feststoffe) mischen.

Die Formmassen gemäß der Erfindung sind für die oben genannten Anwendungen besser geeignet als bekannte Formmassen, sie weisen darüberhinaus keine nennenswerten Nachteile auf.

Wesentlich ist es, wenigstens partiell vernetzte Dien-Kautschuke mit Kautschukteilchendurchmessern $d_{50}$ von 0,05 - 1 $\mu$m zu verwenden, die eine "bimodale" Teilchendurchmesserverteilung haben. Das bedeutet, daß durch Kombination bestimmter grobteiliger Kautschuke mit bestimmten feinteiligen Kautschuken in Form von Pfropfpolymerisaten B) Formmassen mit wesentlich verbesserten Eigenschaften erhalten werden. Dazu muß die Kautschukteilchengrößen-Verteilung, die zur Herstellung von Komponente B) eingesetzt wird, bimodal sein und soll zwei deutliche Maxima aufweisen. Um den mit diesen spezifischen Teilchengrößenverteilungen zusammenhängenden Effekt jedoch zu erhalten, ist es erforderlich, von Kautschuken auszugehen, deren Teilchengrößenverteilung bestimmten Parametern gehorchen:

Dazu gehören eine kritische Breite der Verteilungskurve (ausgedrückt durch den Quotienten Q), ein kritischer Abstand der Verteilungskurvenmaxima (ausgedrückt durch die Differenz $d_{10}$ (b) - $d_{90}$ (a)).

Die Formmassen gemäß der Erfindung zeichnen sich dadurch aus, daß sie, abhängig vom Modifikatorgehalt, das Zähbruchverhalten bis minus 20°C, z.T. bis minus 30°C beibehalten bzw. daß ein Rückgang der Zähigkeitseigenschaften erst unterhalb dieser Temperatur eintritt.

Die Wirkung der Mischung verschiedener Polydiene ist überraschend, da im allgemeinen feinteilige Pfropfkautschuke die Schlagzähigkeitsparameter bei multiaxialer Beanspruchung von Polyoxymethylen nur mäßig verbessern und grobteilige Pfropfkautschuke mit absinkenden Temperaturen zu einem stetigen Abfall der Zähigkeitsparameter führen.

Die auftretende synergistische Wirkung war nicht vorhersehbar, weil die bekannten ABS-Kunststoffe, die grobteilige und feinteilige Pfropfkautschuke nebeneinander enthalten (vgl. z.B. DE-B 2 420 358), mit sinkender Temperatur einen kontinuierlichen Zähigkeitsabfall aufweisen und dies eigentlich auch für Polyoxymethylene zu erwarten war.

Ein wesentliches Merkmal der Mischungen gemäß der Erfindung ist der Gehalt an Komponente B), also dem kautschukelastischen Pfropfcopolymeren, dessen Einsatzmenge bereits genannt wurde.

Die Komponente B) besteht erfindungsgemäß aus Partikeln, die überwiegend, vorzugsweise zu mehr als 70 % eine Kern-Hüllen (Schalen)-Struktur aufweisen. Der Kern wird dabei von einer kautschukelastischen Polymer-Phase gebildet, auf welche die harte Hülle, die aus mehreren Schalen bestehen kann, aufgepfropft ist. Der Kern soll dabei nach einem weiteren Merkmal der Erfindung vorzugsweise einphasig sein, was bedeutet, daß er überwiegend, vorzugsweise vollständig aus der kautschukelastischen Weichphase besteht und nur in geringem Umfang, vorzugsweise überhaupt keine Einschlüsse aus harten Polymerbestandteilen der Hülle enthält. Im allgemeinen macht der Kern 40 bis 95 Gew.-%, vorzugsweise 60 bis 90 %, und insbesondere 70 bis 80 % der Teilchen der Komponente B) aus; dementsprechend beträgt der Anteil der Hülle (Schalen) 5 bis 60 Gew.-%, vorzugsweise 10 bis 40 Gew.-% und insbesondere 20 bis 30 Gew.-%.

3

Der Kern besteht bei der Komponente B) aus Polymeren auf der Basis von Polydienen, wie Polybutadien oder Polyisopren. Gegebenenfalls kann das Kern-Polymere bis zu 30 Gew.-%, vorzugsweise bis zu 15 Gew.-%, insbesondere bis zu 5 Gew.-% an Comonomer-Einheiten enthalten. Bevorzugt handelt es sich bei den Comonomeren um andere ethylenisch ungesättigte Monomere, z.B. Styrol, Acrylnitril, Ester der Acryl- oder Methacrylsäure mit einwertigen $C_1$-$C_4$-Alkoholen wie Methylacrylat, Ethylacrylat, Butylacrylat oder die entsprechenden Methacrylate. Das Kern-Polymere ist dabei wenigstens teilweise vernetzt, wobei der Gelanteil (in Toluol) im allgemeinen $\geq$ 70 % und vorzugsweise $\geq$ 80 %, insbesondere $\geq$ 90 %, beträgt. Der Gelgehalt der Dienkautschuke wird bei 25°C in Toluol bestimmt (M. Hoffmann, H. Krömer, R. Kuhn, Polymeranalytik I und II, Georg Thieme-Verlag, Stuttgart 1977). Als Vernetzer kommt beispielsweise Divinylbenzol in Frage.

Die Hülle der Partikel der Komponente B) besteht aus sogenannten harten Polymeren, die auf den Kern, d.h. das Pfropfsubstrat, aufgepfropft sind. Die Hülle kann dabei einschalig oder mehrschalig sein, wobei im Falle der Mehrschaligkeit die verschiedenen Schalen im allgemeinen aus unterschiedlichen Polymeren bzw. Copolymeren bestehen.

Monomere, die zu geeigneten Polymeren der Partikelhülle führen, sind Methacrylnitril, Acrylnitril, Methacrylate, deren Alkoholkomponente 1 bis 4 C-Atome aufweist, wie Methylmethacrylat und Acrylate, die sich von Alkoholen mit 1 bis 6 Kohlenwasserstoffatomen ableiten, wie Ethylacrylat, Propylacrylat oder n-Butylacrylat. Zum Aufbau der Hülle kommen auch Copolymere aus diesen Monomeren in Frage oder auch Copolymere aus einem oder mehreren dieser Monomeren mit Styrol, $\alpha$-Methylstyrol, Vinyltoluol. Mischungen aus 20 bis 80 Gew.-% Acrylnitril oder Methacrylnitril mit 80 bis 20 Gew.-% der genannten Acrylate, Methacrylate oder Vinylverbindungen haben sich dabei als besonders günstig erwiesen. Bevorzugt sind weiterhin solche Pfropfpolymerisate als Komponente B), bei denen die Hülle zweischalig aufgebaut ist, wobei die erste Schale aus Polystyrol besteht und die zweite (äußere Schale) aus Poly(meth)acrylat, das unvernetzt oder - vorzugsweise - teilweise vernetzt sein kann. Als vernetzende Monomere können dabei multifunktionale Monomere wie beispielsweise Äthylenglykol- oder Butylenglykoldimethacrylat oder Triallylcyanurat dienen.

Die Glasübergangstemperatur der vorstehend beschriebenen Polydiene der Komponente B) gemäß der Erfindung sollte zweckmäßigerweise im Bereich von minus 40°C bis minus 120°C, vorzugsweise unterhalb von minus 60°C und insbesondere zwischen minus 80°C und minus 120°C liegen.

Die Art der Herstellung der erfindungsgemäß als Komponente B) eingesetzten Pfropfcopolymeren mit Kern-Hüllen-Struktur ist bekannt und erfolgt entweder durch Einstufenpolymerisation im Falle einer einschaligen Hülle oder durch Mehrstufenpolymerisation im Falle einer mehrschaligen Hülle. Letztere Verfahrensweise ist beispielsweise in der US-A 3 985 704 beschrieben. In beiden Fällen wird die Pfropfcopolymerisation mittels wasserlöslicher Initiatoren oder mittels aktivierter Initiatoren oder mittels aktivierter Initiatorsysteme, deren eine Komponente (Aktivator) zumindest wasserlöslich ist, durchgeführt (vgl. hierzu C.B. Bucknall, "Toughened Plastics", Seite 98, Applied Science Publishers Ltd., 1977, London).

Sowohl bei der einstufigen wie auch bei der mehrstufigen Pfropfpolymerisation geht man von Polydienen aus, die in Form wäßriger Latices mit mittlerer Teilchengröße $d_{50}$ im Bereich von 0,05 bis 1 $\mu$m, vorliegen und die wenigstens teilsweise vernetzt sind.

Bei den angegebenen mittleren Teilchengrößen handelt es sich in allen Fällen um das Gewichtsmittel der Teilchengröße, wie sie mit Hilfe einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurcbmesser, der auch als $d_{50}$-Wert der integralen Massenverteilung bezeichnet wird, ist dabei als der Teilchendurchmesser definiert, bei dem 50 Gewichtsprozent der Teilchen einen gleichen oder kleineren Durchmesser haben als der Durchmesser, der dem $d_{50}$-Wert entspricht. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Die $d_{10}$- bzw. $d_{90}$-Werte der integralen Massenverteilung sind dabei entsprechend dem $d_{50}$-Wert definiert mit dem unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Die Differenz $d_{10}$ (b) - $d_{90}$ (a) stellt dann ein Maß für die Überlappung der Kurven dar: Ist die Differenz positiv, so liegt keine oder nur eine geringfügige Kurvenüberlappung vor, ist die Differenz negativ, so ist eine Kurvenüberlappung vorhanden, deren Ausmaß durch die Größe des negativen Wertes beschrieben wird.

Aus der Tatsache, daß die Kautschukteilchen in den Formmassen in gepfropftem Zustand vorliegen, könnte man vermuten, daß durch die Pfropfung die Kautschukteilchengröße verändert wurde, verglichen mit den in den Kautschuklatices (zur Herstellung von B) vorliegenden Kautschukteilchen. Es hat sich allerdings gezeigt, daß die Pfropfung sowie die Pfropfhüllenmenge gemäß den hier beschriebenen Kennzeichen die Kautschukteilchengröße praktisch kaum beeinflußt, so daß an Formmassen ermittelte Verteilungskurven mit an Latex ermittelten Verteilungskurven verglichen und gleichgesetzt werden können.

Kautschuke mit den angeführten Teilchendurchmessern können durch Emulsionspolymerisation geeigneter Monomeren erhalten werden. In den dazu bekannten Emulsionspolymerisationsverfahren lassen sich die Latexteilchendurchmesser durch Wahl der Verfahrensbedingungen einstellen, z.B. durch Art und Konzentration des Emulgators, Teilchen-Agglomerisation, Elektrolyte, Temperatur, Monomer-/Polymer-Konzentration.

Für die Herstellung der Komponente B) polymerisiert man die Monomeren bzw. Monomerengemische in Gegenwart der Polydienlatices, wobei ein überwiegender Teil der Monomeren auf die Polydienpartikel aufgepfropft wird. Die Menge an Polydien beträgt im allgemeinen 40 bis 95 Gew.-% und die Menge des Monomeren(gemisches) 5 bis 60 Gew.-%, jeweils bezogen auf die Gesamtmenge. Die erreichte Pfropfausbeute bewegt sich zwischen 60 und 95 %, vorzugsweise zwischen 80 und 90 %. Die Pfropfpolymerisation wird in Lösung oder Emulsion, bevorzugt in wäßriger Dispersion durchgeführt. Hierzu werden die feinteiligen Polydienlatices unter Zusatz der üblichen Polymerisationshilfsstoffe wie Emulgier- bzw. Suspendierhilfsmittel, Radikalinitiatoren, Regler etc. vorgelegt, das Monomere oder die Monomermischung zugegeben und bei Temperaturen zwischen 30 und 95 °C, vorzugsweise 50 bis 80 °C polymerisiert. Bei einer Einstufenreaktion ist es zweckmäßig, einen wasserlöslichen Initiator einzusetzen, beispielsweise wasserlösliche Peroxide, Percarbonate oder Perborate. Bei einem Mehrkomponenten-Initiatorsystem (Redoxsystem) muß zumindest eine Komponente wasserlöslich sein. Beispiele für Emulgatoren (Dispergatoren) sind aliphatische und aromatische Sulfate, Sulfonate, sowie Salze von aromatischen oder hydroaromatischen Carbonsäuren.

Im Falle der Mehrstufenreaktion, die erfindungsgemäß bevorzugt ist, erfolgt die Pfropfpolymerisation und die Aufarbeitung wie in der US-A 3 985 704 beschrieben ist. Dabei wird zur Ausbildung einer mehrschaligen Hülle zunächst ein Monomeres, beispielsweise Styrol auf das Kernpolymere, z.B. ein Butadien-Styrol-Copolymeres und danach ein anderes Monomeres oder Monomerengemisch, gegebenenfalls in Anwesenheit eines Vernetzers aufgepfropft.

Die "bimodalen" Pfropfprodukte B) lassen sich nach verschiedenen Verfahren herstellen. So kann man eine Dispersion feinteiliger Kautschukteilchen (entsprechend a) mit Monomeren bepfropfen, diese Pfropfpolymeremulsion dann mit einer getrennt erzeugten Pfropfpolymerdispersion grobteiliger Kautschukteilchen (entsprechend b) abmischen und anschließend diese Mischung aufarbeiten.

Man kann auch die Kautschukteilchendispersion (Latices) mischen und auf dieses Gemisch die Pfropfmonomeren, insbesondere in wäßriger Emulsion mittels Radikale bildender Systeme, pfropfpolymerisieren und dann in bekannter Weise aufarbeiten.

Sowohl bei den Verfahren der getrennten Pfropfung und gemeinsamen Aufarbeitung des Pfropfproduktes als auch bei der getrennten Herstellung von feinteiligem und grobteiligem Pfropfprodukt ist es möglich, Pfropfprodukte mit unterschiedlichem Aufbau der feinteiligen und der grobteiligen Komponente zu erhalten.

Nach einem bevorzugten Verfahren werden die Mischungen aus Kautschukdispersionen der erfindungsgemäßen bimodalen Teilchenverteilung mit Pfropfmonomeren bepfropft, insbesondere in wäßriger Emulsion mittels Radikale bildender Systeme, und dann in der bekannten Weise aufgearbeitet, beispielsweise durch Sprühtrocknung.

Man kann aber auch feinteilige Pfropfkautschuke und grobteilige Pfropfkautschuke getrennt herstellen und in Mengen entsprechend der erfindungsgemäßen Zusammensetzung a/b mit den thermoplastischen Polyoxymethylenen zur Herstellung der erfindungsgemäßen Formmassen abmischen.

Gemäß der Erfindung werden als Basispolymere (Komponente A) die bekannten Polyoxymethylene eingesetzt, wie sie beispielsweise in der DE-A 2 947 490 beschrieben sind. Es handelt sich hierbei im wesentlichen um unverzweigte lineare Polymere, die in der Regel mindestens 80 %, vorzugsweise 90 % Oxymethyleneinheiten (- $CH_2O$ -) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere kommen $\alpha$) cyclische Äther mit 3, 4 oder 5, vorzugsweise 3 Ringgliedern, $\beta$) von Trioxan verschiedene cyclische Acetale mit 5 bis 11, vorzugsweise 5, 6, 7 oder 8 Ringgliedern und $\gamma$) lineare Polyacetale, jeweils in Mengen von 0,1 bis 20, vorzugsweise 0,5 bis 10 Gew.-%, in Frage. Am besten eignen sich Copolymere aus 95 bis 99,5 Gew.-% Trioxan und 0,5 bis 5 Gew.-% einer der vorgenannten Cokomponenten.

Die Werte für die reduzierte spezifische Viskosität (RSV-Werte) des Polyoxymethylens betragen im allgemeinen 0,3 bis 2,0 dl.g$^{-1}$, vorzugsweise 0,5 bis 1,5 dl.g$^{-1}$ (gemessen in Butyrolacton, stabilisiert mit 2 Gew.-% Diphenylamin bei 140°C in einer Konzentration von 0,5 g/100 ml). Die Schmelzindex-Werte MFI 190/2,16 liegen zumeist zwischen 0,02 und 50 g.min$^{-1}$ (DIN 53 735). Der Kristallschmelzpunkt des Polyoxymethylens liegt im Bereich von 140 bis 180°C, vorzugsweise 150 bis 170°C; seine Dichte beträgt 1,38 bis 1,45 g.ml$^{-1}$, vorzugsweise 1,40 bis 1,43 g.ml$^{-1}$ (DIN 53 479).

Die erfindungsgemäße Mischung kann gegebenenfalls Zusatzstoffe, wie Stabilisatoren, Nukleierungsmittel, Antistatika, Licht- und Flammschutzmittel, Gleit- und Schmiermittel, Weichmacher, Pigmente, Farbstoffe, optische Aufheller, Verarbeitungshilfsmittel und dergleichen enthalten, deren Menge bis zu 50 Gew.-%, bezogen auf die Gesamtmischung betragen kann.

Als Stabilisatoren der Polyacetalphase eignen sich gegen den Einfluß von Wärme insbesondere Polyamide, Amide mehrbasiger Carbonsäuren, Amidine, z.B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z.B. Calciumstearat, Calciumrizinoleat, Calciumlactat und Calciumcitrat. Als Oxidationsstabilisatoren werden vor allem Biphenolverbindungen verwendet, vorzugsweise Diester von einbasigen 4-Hydroxyphenylalkansäuren, die 7 bis 13, vorzugsweise 7, 8 oder 9 Kohlenstoffatome enthalten. Es ist in jedem Fall vorteilhaft, zum verstärkten Schutz gegen oxidativen Angriff der Pfropfcopolymeren (Komponente B) neben den üblichen Diphenolverbindungen schwefelhaltige Costabilisatoren, wie $\beta,\beta'$-Thio-di(propionsäurelaurylester) zuzugeben. Als hervorragende Oxidationsstabilisatoren bewährt haben sich auch Systeme auf Diphenylamin- oder Naphthylaminbasis. Zur Stabilisierung der Komponente B) eignen sich auch phenolische Antioxidantien (BE-A 853 844 oder EP-A 0 044 159).

Als Lichtstabilisatoren sind beispielsweise $\alpha$-Hydroxybenzophenonderivate und Benzotriazolderivate geeignet.

Die Stabilisatoren werden im allgemeinen zumeist in einer Menge von insgesamt 0,1 bis 5, vorzugsweise 0,5 bis 3 Gew.-% (bezogen auf die gesamte Formmasse) eingesetzt.

Weiterhin kann die erfindungsgemäße Mischung auch noch übliche Füllstoffe enthalten, z.B. faserförmige Verstärkungsmaterialien wie Glasfasern, Kohlenstoffasern; nichtfaserige Füllstoffe uie Glaspulver, Graphit, Ruß, Metallpulver, Metalloxide, Silikate, Carbonate und Molybdän (IV)-Sulfid. Diese Füllstoffe können mit einem Haftvermittler bzw. Haftvermittlersystem ausgerüstet sein. Die Menge des Füllstoffes beträgt bis zu 50 Gew.-%, vorzugsweise 5 bis 40 Gew.-%, bezogen auf die Gesamtmischung. Vorzugsweise enthält die erfindungsgemäße Mischung jedoch keine Füllstoffe.

Die Herstellung der erfindungsgemäßen Mischungen erfolgt durch intensives Mischen der Bestandteile bei erhöhter Temperatur, d.h. im allgemeinen bei Temperaturen oberhalb des Schmelzpunktes der Komponente A, also bei etwa 160 bis 250°C, vorzugsweise zwischen 180 und 220°C in gut mischenden Aggregaten wie Knetern, Extrudern, vorzugsweise Zweischneckenextrudern, oder auf Mischwalzen. Üblicherweise werden die pulverförmigen Komponenten zunächst bei Raumtemperatur mechanisch gemischt und anschließend zur vollständigen Homogenisierung aufgeschmolzen. Die erfindungsgemäßen Formmassen zeichnen sich durch hervorragende Zähigkeitseigenschaften aus. Ein herausragendes Merkmal ist die Fähigkeit, hohe multiaxiale Deformationskräfte auch bei tiefen Temperaturen aufzunehmen.

Die erfindungsgemäßen Mischungen lassen sich mechanisch, z.B. durch Zerhacken oder Mahlen zu Granulaten, Schnitzeln, Flocken oder Pulvern zerkleinern. Sie sind thermoplastisch und damit allen für thermoplastischen Massen typischen Verarbeitungsweisen zugänglich. Sie können daher durch Spritzgießen, Strangpressen, Schmelzspinnen oder Tiefziehen zu beliebigen Formkörpern verarbeitet werden und eignen sich als technischer Werkstoff zur Herstellung von Halbzeug und Fertigteilen, z.B. Bändern, Stäben, Platten, Filmen, Rohren und Schläuchen, sowie Maschinenteilen, z.B. Gehäusen, Zahnrädern, Lagerteilen und Steuerelementen sowie von Autozubehörteilen, wie Spoilern und dergleichen.

Beispiele

Die in den Beispielen verwendeten Pfropfcopolymeren (Komponente B) wurden durch wäßrige Emulsions-Polymerisation der in Tabelle 1 genannten Monomeren oder Monomermischungen in Gegenwart der dispergierten Polybutadiene erhalten. Die auf diese Weise hergestellten Pfropfcopolymeren, die (Beispiele 1 bis 12) Kern-Hüllen-Struktur aufweisen, wurden sprühgetrocknet und in einem Doppelschneckenextruder in unterschiedlichen Gewichtsverhältnissen mit Polyorymethylen unterschiedlicher Schmelzviskosität gemischt. Die Massetemperatur des Mischgutes lag bei etwa 210 bis 230°C (Gehäusetemperatur ca. 190°C). Das getrocknete Granulat wurde auf dem üblichen Weg zu Prüfkörpern verspritzt, an denen die in der nachfolgenden Tabelle 2 (Beispiele 13 bis 25) und den Vergleichsbeispielen 1 bis 3 angeführten Werte ermittelt wurden. Die Beispiele 1, 2, 7, 8, 13, 14, 20 und 21 stellen ebenfalls Vergleichsbeispiele dar.

Als Materialien wurden eingesetzt:

Komponente A

I: Copolymerisat aus Trioxan und ca. 2 Gew.-% Ethylenoxid mit einer Schmelzviskosität MFI 190/2,16 von ca. 9,0 g/10 min gemäß DIN 53 735
II: Homopolymerisat aus Formaldehyd mit einer Schmelzviskosität MFI 190/2,16 von ca. 10,0 g/10 min

Komponente B

III Pfropfkautschuke
III.1 Herstellung Styrol/Acrylnitril gepfropftes Polybutadien (ABS)
In einem Glasreaktor wurden unter Inertgas 1000 Gew.-Teile einer Mischung der Polybutadienlatices (Gelgehalt ca. 85 %) mit den mittleren Teilchengrößen $d_{50}$ = 0,12 (a) und $d_{50}$ = 0,45 (b) und dem in Tabelle 1 angegebenen Verhältnis vorgelegt. Der Feststoffgehalt betrug 30 Gew.-%, der pH-Wert lag bei 10,0. Nach Erwärmen der Mischung auf 70°C wurden 0,6 Gew.-Teile Kaliumpersulfat, gelöst in 20 Gew.-Teilen Wasser, zugegeben. Innerhalb eines Zeitraums von 3 Stunden wurde ein Gemisch aus den Monomeren 90 g Styrol und 38,5 g Acrylnitril und einer Lösung aus 5 Gew.-Teilen eines Emulgators ([R])Dresinate 731, Hersteller: Hercules Inc., Wilmington D E , USA) in 80 Gew.-Teilen Wasser gleichmäßig zugetropft. Der pH-Wert wurde überwacht und mit 1n-NaOH konstant bei 10,0 gehalten. Nach erfolgtem Zulauf der Pfropfmonomeren wurde die Temperatur auf 80°C gesteigert und die Mischung über 3 Stunden auspolymerisiert. Die erhaltenen Pfropfcopolymeren wurden durch Sprühtrocknung als feinteiliges Pulver gewonnen.
III.2 Herstellung Styrol und Methylmethacrylat gepfropftes Polybutadien (MBS)
Entsprechend der unter III.1 gegebenen Vorschrift wurden 1000 Gew.-Teile der feindispersen Polybutadienlatices a) und b) in einem Reaktor unter inerten Bedingungen vorgelegt. Man stellte mit verdünnter Essigsäure auf pH = 9,0 und fügte 10 Gew.-% der benötigten Styrolmenge zu. Die Mischung wurde auf 70°C erwärmt und nach Zugabe von 0,6 Gew.-Teilen Kaliumpersulfat 15 Minuten bei 70°C belassen. Nach Anspringen der Polymerisation wurde innerhalb von 90 Minuten das restliche Styrol zugetropft und nach etwa einer Stunde die Mischung auf 80°C gebracht. Innerhalb von 60 Minuten wurde Methylmethacrylat zudosiert, dem 1 Gew.-% Ethylenglykoldimethacrylat zugesetzt war und die Mischung danach ca. 90 Minuten bei 80°C gehalten. Das Pfropfcopolymere wurde wie im Beispiel III.1 durch Sprühtrocknung als feinteiliges Pulver gewonnen.
IV. Herstellung und Ausprüfung der Formmassen
Die Komponenten gemäß Tabelle 2 wurden in einem kontinuierlich arbeitenden Doppelwellenextruder aufgeschmolzen, homogenisiert und stabilisiert. Die Zylindertemperaturen sind dabei so eingestellt worden, daß die Massetemperaturen etwa zwischen 210 und 230°C lagen. Der austretende Schmelzenstrang wurde abgekühlt, granuliert und bei ca. 100 bis 110°C unter Inertgas getrocknet.

Das Granulat wurde mittels einer Spritzgußmaschine zu Prüfkörpern verspritzt und die Schädigungsarbeit im Durchstoßversuch mit elektronischer Meßwerterfassung nach DIN 53 453 bei den in Tabelle 2 angegebenen Temperaturen geprüft.

Die Prüfkörper aus den Formmassen gemäß der Erfindung wiesen dabei bis zu Prüftemperaturen von minus 40°C gegenüber bisher bekannten Systemen wesentlich verbesserte Zähigkeitsparameter auf, ohne daß dabei die ursprünglich vorteilhaften Eigenschaften der Polyoxymethylene, beispielsweise gute Witterungs- und Alterungsbeständigkeit, hohe Oberflächengüte, ausgezeichnetes Gleit- und Abriebverhalten oder günstige thermoplastische Verarbeitbarkeit, wesentlich beeinträchtigt wurden.

Tabelle 1

| Beispiel | Polybutadien-Pfropfgrundlage | | Pfropfmonomere * | | | Pfropfhülle |
| | $d_{50} = 0,1$ μm Gew.-% (a) | $d_{50} = 0,45$ μm Gew.-% (b) | S Gew.% | AN Gew.% | MMA Gew.% | |
|---|---|---|---|---|---|---|
| 1 (vgl.) | – | 70 | 21 | 9 | – | einschalig |
| 2 (vgl.) | 70 | – | 21 | 9 | – | einschalig |
| 3 | 15 | 55 | 21 | 9 | – | einschalig |
| 4 | 30 | 40 | 21 | 9 | – | einschalig |
| 5 | 35 | 35 | 21 | 9 | – | einschalig |
| 6 | 55 | 15 | 21 | 9 | – | einschalig |
| 7 (vgl.) | – | 70 | – | – | 30 | einschalig |
| 8 (vgl.) | 70 | – | – | – | 30 | einschalig |
| 9 | 35 | 35 | – | – | 30 | einschalig |
| 10 | 30 | 40 | 5 | | 25 | zweischalig |
| 11 | 35 | 35 | 5 | | 25 | zweischalig |
| 12 | 40 | 30 | 5 | | 25 | zweischalig |

\* S = Styrol

AN = Acrylnitrl

MMA = Methylmethacrylat

EP 0 470 618 B1

Tabelle 2

| | Polyoxymethylen (A) | | Komponenten Pfropfkautschuk (B) | | Mittlere Teil-chengröße µm | Mehraxiale Schlagzähigkeit* Schädigungsarbeit J | | |
|---|---|---|---|---|---|---|---|---|
| | Typ | Gew.-% | Typ | Gew.-% | | 23° | -20° | -40° |
| Vergleichs- 1 | Copo | 70 | ABS (DE 1964156) | 30 | 5 - 20 [1] | 0,75 | 1,0 | 0,25 |
| beispiele 2 | Copo | 70 | ABS: Blendex[R] 27884 | 30 | 0,07 - 6 [1] | 11,5 | 12,0 | 2,5 |
| 3 | Copo | 70 | MBS: Paraloid[R] EXL 2600 | 30 | 0,15 | 10,5 | 7,5 | 0,9 |
| Beispiele 13 (vgl.) | Copo | 70 | Bsp. 1 | 30 | 0,45 | 12,0 | 11,0 | 4,0 |
| 14 (vgl.) | Copo | 70 | 2 | 30 | 0,15 | 13,0 | 13,0 | 4,5 |
| 15 | Copo | 70 | 3 | 30 | 0,15 / 0,45 | 13,0 | 14,0 | 4,0 |
| 16 | Copo | 70 | 4 | 30 | " | 17,0 | 17,5 | 7,5 |
| 17 | Copo | 70 | 5 | 30 | " | 19,5 | 20,0 | 9,0 |
| 18 | Homo | 70 | 5 | 30 | " | 20,5 | 21,5 | 9,0 |
| 19 | Copo | 70 | 6 | 30 | " | 18,0 | 18,0 | 7,5 |
| 20 (vgl.) | Copo | 70 | 7 | 30 | 0,45 | 11,5 | 12,5 | 3,0 |
| 21 (vgl.) | Copo | 70 | 8 | 30 | 0,15 | 13,0 | 14,0 | 1,1 |
| 22 | Copo | 70 | 9 | 30 | 0,15 / 0,45 | 19,0 | 20,5 | 9,0 |
| 23 | Copo | 70 | 10 | 30 | " | 16,0 | 18,0 | 7,5 |
| 24 | Copo | 70 | 11 | 30 | " | 18,5 | 19,0 | 9,0 |
| 25 | Copo | 70 | 12 | 30 | " | 17,0 | 17,0 | 8,0 |

\* gemäß DIN 53 443 an 2-mm Platten

1) polydispers

EP 0 470 618 B1

**Patentansprüche**

**Patentansprüche für folgende Vertragsstaaten : AT, BE, CH, DE, DK, FR, GB, GR, IT, LI, LU, NL, SE**

1. Thermoplastische Formmassen aus

   A. 50 bis 95 Gew.-% Polyoxymethylen

   B. 5 bis 50 Gew.-% eines kautschukelastischen Pfropfcopolymeren, das eine bimodale Teilchengrößenverteilung aufweist,

   jeweils bezogen auf die Summe der Komponenten A) und B) und gegebenenfalls üblichen Zusatzstoffen, wobei Komponente B) aus

   $\alpha$) einem kautschukelastischen, wenigstens teilweise vernetzten Kern auf Basis mindestens eines Polydiens mit Teilchendurchmessern von 0,05 bis 1 $\mu$m, dem folgende Kautschuke zugrunde liegen:

   a) 15-85 Gew.-% (bezogen auf die Summe a + b) eines Kautschuklatex mit einem Teilchen-durchmesser $d_{50}$ von 0,05-0,2 $\mu$m und

   b) 85-15 Gew.-% (bezogen auf die Summe a + b) eines Kautschuklatex mit einem Teilchen-durchmesser $d_{50}$ von 0,2-1 $\mu$m,

   mit der Maßgabe, daß

   1) der Teilchendurchmesser $d_{50}$ (Kautschuk b) um den Faktor 1,5-8 größer ist als der Teilchendurchmesser $d_{50}$ (Kautschuk a),

   2) der Quotient Q = ($d_{90}$ - $d_{10}$)/$d_{50}$ der jeweiligen Kautschuke höchstens 2 ist und

   3) die Differenz $d_{10}$ (b) - $d_{90}$ (a) 0,01 bis minus 0,10 beträgt, und

   $\beta$) mindestens einer harten Pfropfhülle aus wenigstens einem Vinylmonomeren aus der Reihe Styrol, (Meth)Acrylnitril und Methylmethacrylat besteht.

2. Formmasse nach Anspruch 1, dadurch gekennzeichnet, daß die Komponente B) überwiegend, vorzugsweise zu mehr als 70 %, eine Kern-Hüllen (Schalen)-Struktur aufweist.

3. Formmasse nach Anspruch 1 oder 2, dadurch gekennzeichnet, daß der Kern einphasig ist.

4. Formmasse nach einem oder mehreren der Ansprüche 1 bis 3, dadurch gekennzeichnet, daß der Kern 40-95 Gew.-% der Teilchen der Komponente B) ausmacht und der Anteil der Hülle 5 bis 60 Gew.-% beträgt.

5. Formmasse nach einem oder mehreren der Ansprüche 1 bis 4, dadurch gekennzeichnet, daß das Pfropfcopolymer einen Gelgehalt von größer oder gleich 70 % aufweist.

6. Formmasse nach einem oder mehreren der Ansprüche 1 bis 5, dadurch gekennzeichnet, daß als Polydiene Polybutadien oder Polyisopren eingesetzt werden, die gegebenenfalls bis zu 30 Gew.-% andere Comonomer-Einheiten enthalten.

7. Formmasse nach einem oder mehreren der Ansprüche 1 bis 6, dadurch gekennzeichnet, daß die Polydienkautschuke eine Glasübergangstemperatur im Bereich von minus 40 bis minus 120°C aufweisen.

8. Formmasse nach einem oder mehreren der Ansprüche 1 bis 7, dadurch gekennzeichnet, daß der Kautschukgehalt der Pfropfprodukte zwischen 50 und 85 Gew.-% liegt.

9. Formmasse nach einem oder mehreren der Ansprüche 1 bis 8, dadurch gekennzeichnet, daß die Pfropfhülle(n) aus Polymethylmethacrylat und/oder aus Polymeren von Mischungen aus 20 bis 80 Gew.-% Acrylnitril oder Methacrylnitril und 80 bis 20 Gew.-% Acrylaten, Methacrylaten oder Vinylmonomeren besteht bzw. bestehen.

10. Formmasse nach einem oder mehreren der Ansprüche 1 bis 9, dadurch gekennzeichnet, daß die Pfropfhülle der Komponente B) einschalig ausgebildet ist und aus Polymeren von Styrol/Acrylnitril oder Methylmethacrylat besteht.

11. Formmasse nach einem oder mehreren der Ansprüche 1 bis 9, dadurch gekennzeichnet, daß die Pfropfhülle zwei- oder mehrschalig ausgebildet ist, die innere Schale aus Polystyrol (vernetzt) besteht und die äußeren Schalen aus Polymeren von Styrol/Methylmethacrylat oder Methylmethacrylat (vernetzt) bestehen.

**12.** Formmasse nach einem oder mehreren der Ansprüche 1 bis 11, dadurch gekennzeichnet, daß das Pfropfprodukt B) durch Mischen eines Kautschuklatex a und eines Kautschuklatex b und anschließende Pfropfpolymerisation mit den Vinylmonomeren hergestellt worden ist.

**13.** Formmasse nach einem oder mehreren der Ansprüche 1 bis 12, dadurch gekennzeichnet, daß sie als übliche Zusatzstoffe Oxydationsstabilisatoren enthält.

**14.** Verwendung der Formmasse nach Anspruch 1 zur Herstellung von Formkörpern.

**15.** Verwendung nach Anspruch 14, dadurch gekennzeichnet, daß Stäbe, Platten, Filme, Rohre, Maschinenteile und Autozubehörteile hergestellt werden.

**Patentansprüche für folgenden Vertragsstaat : ES**

**1.** Verfahren zur Herstellung einer thermoplastischen Formmasse, dadurch gekennzeichnet, daß
A. 50 bis 95 Gew.-% Polyoxymethylen
B. 5 bis 50 Gew.-% eines kautschukelastischen Pfropfcopolymeren, das eine bimodale Teilchengrößenverteilung aufweist,
jeweils bezogen auf die Summe der Komponenten A) und B) und gegebenenfalls üblichen Zusatzstoffen intensiv gemischt werden, wobei Komponente B) aus
$\alpha$) einem kautschukelastischen, wenigstens teilweise vernetzten Kern auf Basis mindestens eines Polydiens mit Teilchendurchmessern von 0,05 bis 1 $\mu$m, dem folgende Kautschuke zugrunde liegen:
a) 15-85 Gew.-% (bezogen auf die Summe a + b) eines Kautschuklatex mit einem Teilchendurchmesser $d_{50}$ von 0,05-0,2 $\mu$m und
b) 85-15 Gew.-% (bezogen auf die Summe a + b) eines Kautschuklatex mit einem Teilchendurchmesser $d_{50}$ von 0,2-1 $\mu$m,
mit der Maßgabe, daß
1) der Teilchendurchmesser $d_{50}$ (Kautschuk b) um den Faktor 1,5-8 größer ist als der Teilchendurchmesser $d_{50}$ (Kautschuk a),
2) der Quotient Q = $(d_{90} - d_{10})/d_{50}$ der jeweiligen Kautschuke höchstens 2 ist und
3) die Differenz $d_{10}$ (b) - $d_{90}$ (a) 0,01 bis minus 0,10 beträgt, und
$\beta$) mindestens einer harten Pfropfhülle aus wenigstens einem Vinylmonomeren aus der Reihe Styrol, (Meth)Acrylnitril und Methylmethacrylat besteht.

**2.** Verfahren nach Anspruch 1, dadurch gekennzeichnet, daß die Komponente B) überwiegend, vorzugsweise zu mehr als 70 %, eine Kern-Hüllen (Schalen)-Struktur aufweist.

**3.** Verfahren nach Anspruch 1 oder 2, dadurch gekennzeichnet, daß der Kern einphasig ist.

**4.** Verfahren noch einem oder mehreren der Ansprüche 1 bis 3, dadurch gekennzeichnet, daß der Kern 40-95 Gew.-% der Teilchen der Komponente B) ausmacht und der Anteil der Hülle 5 bis 60 Gew.-% beträgt.

**5.** Verfahren nach einem oder mehreren der Ansprüche 1 bis 4, dadurch gekennzeichnet, daß das Pfropfcopolymer einen Gelgehalt von größer oder gleich 70 % aufweist.

**6.** Verfahren nach einem oder mehreren der Ansprüche 1 bis 5, dadurch gekennzeichnet, daß als Polydiene Polybutadien oder Polyisopren eingesetzt werden, die gegebenenfalls bis zu 30 Gew.-% andere Comonomer-Einheiten enthalten.

**7.** Verfahren nach einem oder mehreren der Ansprüche 1 bis 6, dadurch gekennzeichnet, daß die Polydienkautschuke eine Glasübergangstemperatur im Bereich von minus 40 bis minus 120 °C aufweisen.

**8.** Verfahren nach einem oder mehreren der Ansprüche 1 bis 7, dadurch gekennzeichnet, daß der Kautschukgehalt der Pfropfprodukte zwischen 50 und 85 Gew.-% liegt.

9. Verfahren nach einem oder mehreren der Ansprüche 1 bis 8, dadurch gekennzeichnet, daß die Pfropfhülle(n) aus Polymethylmethacrylat und/oder aus Polymeren von Mischungen aus 20 bis 80 Gew.-% Acrylnitril oder Methacrylnitril und 80 bis 20 Gew.-% Acrylaten, Methacrylaten oder Vinylmonomeren besteht bzw. bestehen.

10. Verfahren nach einem oder mehreren der Ansprüche 1 bis 9, dadurch gekennzeichnet, daß die Pfropfhülle der Komponente B) einschalig ausgebildet ist und aus Polymeren von Styrol/Acrylnitril oder Methylmethacrylat besteht.

11. Verfahren nach einem oder mehreren der Ansprüche 1 bis 9, dadurch gekennzeichnet, daß die Pfropfhülle zwei- oder mehrschalig ausgebildet ist, die innere Schale aus Polystyrol (vernetzt) besteht und die äußeren Schalen aus Polymeren von Styrol/Methylmethacrylat oder Methylmethacrylat (vernetzt) bestehen.

12. Verfahren nach einem oder mehreren der Ansprüche 1 bis 11, dadurch gekennzeichnet, daß das Pfropfprodukt B) durch Mischen eines Kautschuklatex a und eines Kautschuklatex b und anschließende Pfropfpolymerisation mit den Vinylmonomeren hergestellt worden ist.

13. Verfahren nach einem oder mehreren der Ansprüche 1 bis 12, dadurch gekennzeichnet, daß sie als übliche Zusatzstoffe Oxydationsstabilisatoren enthält.

14. Verfahren nach einem oder mehreren der Ansprüche 1 bis 13, dadurch gekennzeichnet, daß das Mischen der Komponenten bei Temperaturen oberhalb des Schmelzpunktes der Komponente A erfolgt.

15. Verfahren nach Anspruch 14, dadurch gekennzeichnet, daß das Mischen bei etwa 160 bis 250°C, vorzugsweise zwischen 180 und 220°C erfolgt.

16. Verwendung der Formmasse nach Anspruch 1 zur Herstellung von Formkörpern.

17. Verwendung nach Anspruch 16, dadurch gekennzeichnet, daß Stäbe, Platten, Filme, Rohre, Maschinenteile und Autozubehörteile hergestellt werden.

**Claims**
**Claims for the following Contracting States : AT, BE, CH, DE, DK, FR, GB, GR, IT, LI, LU, NL, SE**

1. A thermoplastic molding composition comprising
   A. 50 to 95% by weight of polyoxymethylene, and
   B. 5 to 50% by weight of an elastomeric graft copolymer with a bimodal particle size distribution,
   in each case based on the sum of the components A) and B), and optionally conventional additives, component B) comprising $\alpha$) an elastomeric, at least partially crosslinked core based on at least one polydiene having particle diameters of 0.05 to 1 $\mu$m based on the following rubbers:
   a) 15-85% by weight (based on the sum of a + b) of a rubber latex having a particle diameter $d_{50}$ of 0.05-0.2 $\mu$m, and
   b) 85-15% by weight (based on the sum of a + b) of a rubber latex having a particle diameter $d_{50}$ of 0.2-1 $\mu$m,
   with the proviso that
   1) the particle diameter $d_{50}$ (rubber b) is larger than the particle diameter $d_{50}$ (rubber a) by a factor of 1.5-8,
   2) the quotient $Q = (d_{90}-d_{10})/d_{50}$ of the particular rubbers is at most 2 and
   3) the difference $d_{10}$ (b) - $d_{90}$ (a) is 0.01 to minus 0.10, and $\beta$) at least one hard graft shell comprising at least one vinyl monomer selected from the group comprising styrene, (meth)-acrylonitrile and methyl methacrylate.

2. A molding composition as claimed in claim 1, wherein the component B) predominantly, preferably to the extent of more than 70%, has a core-and-shell structure.

3. A molding composition as claimed in claim 1 or 2, wherein the core is single-phase.

EP 0 470 618 B1

4. A molding composition as claimed in one or more of claims 1 to 3, wherein the core makes up 40-95% by weight of the particles of component B) and the shell proportion is 5 to 60% by weight.

5. A molding composition as claimed in one or more of claims 1 to 4, wherein the graft copolymer has a gel content of greater than or equal to 70%.

6. A molding composition as claimed in one or more of claims 1 to 5, wherein the polydienes employed are polybutadiene or polyisoprene, which optionally contain up to 30% by weight of other comonomer units.

7. A molding composition as claimed in one or more of claims 1 to 6, wherein the polydiene rubbers have a glass transition temperature in the range from minus 40 to minus 120°C.

8. A molding composition as claimed in one or more of claims 1 to 7, wherein the rubber content of the graft products is between 50 and 85% by weight.

9. A molding composition as claimed in one or more of claims 1 to 8, wherein the graft shell(s) is or are composed of polymethyl methacrylate and/or of polymers of mixtures of 20 to 80% by weight of acrylonitrile or methacrylonitrile and 80 to 20% by weight of acrylates, methacrylates or vinyl monomers.

10. A molding composition as claimed in one or more of claims 1 to 9, wherein the graft shell of component B) is formed as a single shell and is composed of polymers of styrene/acrylonitrile or methyl methacrylate.

11. A molding composition as claimed in one or more of claims 1 to 9, wherein the graft shell is formed of two or more shells, the inner shell is composed of polystyrene (crosslinked) and the outer shells are composed of polymers of styrene/methyl methacrylate or methyl methacrylate (crosslinked).

12. A molding composition as claimed in one or more of claims 1 to 11, wherein the graft product B) has been prepared by mixing a rubber latex a and a rubber latex b and subsequent graft polymerization with the vinyl monomers.

13. A molding composition as claimed in one or more of claims 1 to 12, which contains oxidation stabilizers as customary additives.

14. The use of the molding composition as claimed in claim 1 for the production of moldings.

15. The use as claimed in claim 14, wherein rods, plates, films, tubes, machine parts and car accessories are produced.

**Claims for the following Contracting State : ES**

1. A process for preparing a thermoplastic molding composition, which comprises intensively mixing
   A. 50 to 95% by weight of polyoxymethylene, and
   B. 5 to 50% by weight of an elastomeric graft copolymer with a bimodal particle size distribution,
   in each case based on the sum of the components A) and B), and optionally conventional additives, component B) comprising $\alpha$) an elastomeric, at least partially crosslinked core based on at least one polydiene having particle diameters of 0.05 to 1 $\mu$m based on the following rubbers:
   a) 15-85% by weight (based on the sum of a + b) of a rubber latex having a particle diameter $d_{50}$ of 0.05-0.2 $\mu$m, and
   b) 85-15% by weight (based on the sum of a + b) of a rubber latex having a particle diameter $d_{50}$ of 0.2-1 $\mu$m,
   with the proviso that
      1) the particle diameter $d_{50}$ (rubber b) is larger than the particle diameter $d_{50}$ (rubber a) by a factor of 1.5-8,
      2) the quotient $Q = (d_{90}-d_{10})/d_{50}$ of the particular rubbers is at most 2 and

13

3) the difference $d_{10}$ (b) - $d_{90}$ (a) is 0.01 to minus 0.10, and $\beta$) at least one hard graft shell comprising at least one vinyl monomer selected from the group comprising styrene, (meth)-acrylonitrile and methyl methacrylate.

2. The process as claimed in claim 1, wherein the component B) predominantly, preferably to the extent of more than 70%, has a core-and-shell structure.

3. The process as claimed in claim 1 or 2, wherein the core is single-phase.

4. The process as claimed in one or more of claims 1 to 3, wherein the core makes up 40-95% by weight of the particles of component B) and the shell proportion is 5 to 60% by weight.

5. The process as claimed in one or more of claims 1 to 4, wherein the graft copolymer has a gel content of greater than or equal to 70%.

6. The process as claimed in one or more of claims 1 to 5, wherein the polydienes employed are polybutadiene or polyisoprene, which optionally contain up to 30% by weight of other comonomer units.

7. The process as claimed in one or more of claims 1 to 6, wherein the polydiene rubbers have a glass transition temperature in the range from minus 40 to minus 120°C.

8. The process as claimed in one or more of claims 1 to 7, wherein the rubber content of the graft products is between 50 and 85% by weight.

9. The process as claimed in one or more of claims 1 to 8, wherein the graft shell(s) is or are composed of polymethyl methacrylate and/or of polymers of mixtures of 20 to 80% by weight of acrylonitrile or methacrylonitrile and 80 to 20% by weight of acrylates, methacrylates or vinyl monomers.

10. The process as claimed in one or more of claims 1 to 9, wherein the graft shell of component B) is formed as a single shell and is composed of polymers of styrene/acrylonitrile or methyl methacrylate.

11. The process as claimed in one or more of claims 1 to 9, wherein the graft shell is formed of two or more shells, the inner shell is composed of polystyrene (crosslinked) and the outer shells are composed of polymers of styrene/methyl methacrylate or methyl methacrylate (crosslinked).

12. The process as claimed in one or more of claims 1 to 11, wherein the graft product B) has been prepared by mixing a rubber latex a and a rubber latex b and subsequent graft polymerization with the vinyl monomers.

13. The process as claimed in one or more of claims 1 to 12, which contains oxidation stabilizers as customary additives.

14. The process as claimed in one or more of claims 1 to 13, wherein the mixing of the components takes place at temperatures above the melting point of component A.

15. The process as claimed in claim 14, wherein the mixing takes place at about 160 to 250°C, preferably between 180 and 220°C.

16. The use of the molding composition as claimed in claim 1 for the production of moldings.

17. The use as claimed in claim 16, wherein rods, plates, films, tubes, machine parts and car accessories are produced.

**Revendications**
**Revendications pour les Etats contractants suivants : AT, BE, CH, DE, DK, FR, GB, GR, IT, LI, LU, NL, SE**

1.  Matières moulables thermoplastiques formées de
    A. 50 à 95 % en poids de polyoxyméthylène
    B. 5 à 50 % en poids d'un copolymère greffé à élasticité caoutchouteuse, qui présente une répartition de taille de particule bimodale,
    à chaque fois rapporté à la somme des composants A) et B) et éventuellement des additifs classiques, le composant B) étant constitué
    $\alpha$) d'une âme à élasticité caoutchouteuse, au moins partiellement réticulée, à base d'au moins un polydiène ayant un diamètre de particules compris entre 0,05 et 1 $\mu$m, à base des caoutchoucs suivants :
    a) 15 à 85 % en poids (rapportés à la somme a + b) d'un latex de caoutchouc ayant un diamètre de particules $d_{50}$ compris entre 0,05 et 0,2 $\mu$m, et
    b) 85 à 15 % en poids (rapportés à la somme a + b) d'un latex de caoutchouc ayant un diamètre de particules $d_{50}$ compris entre 0,2 et 1 $\mu$m, étant entendu que
    1) le diamètre de particules $d_{50}$ (caoutchouc b) est supérieur d'un facteur compris entre 1,5 et 8 au diamètre de particules $d_{50}$ (caoutchouc a),
    2) le quotient $Q = (d_{90} - d_{10})/d_{50}$ vaut 2 au maximum pour chacun des caoutchoucs et
    3) la différence $d_{10}$ (b) - $d_{90}$ (a) va de 0,01 jusqu'à moins 0,10, et
    $\beta$) d'au moins d'une gaine greffée dure formée d'au moins un monomère vinylique de la famille des styrène, (méth)acrylonitrile et méthacrylate de méthyle.

2.  Matières moulables selon la revendication 1, caractérisées en ce que le composant B) possède de manière prédominante, de préférence jusqu'à 70 %, une structure âme-gaine (en couches).

3.  Matières moulables selon la revendication 1 ou 2, caractérisées en ce que l'âme est monophasique.

4.  Matières moulables selon l'une ou plusieurs des revendications 1 à 3, caractérisées en ce que l'âme constitue 40 à 95 % en poids des particules du composant B) et la partie de la gaine est de 5 à 60 % en poids.

5.  Matières moulables selon l'une ou plusieurs des revendications 1 à 4, caractérisées en ce que le copolymère greffé possède une teneur en gel supérieure ou égale à 70 %.

6.  Matières moulables selon l'une ou plusieurs des revendications 1 à 5, caractérisées en ce que, comme polydiène, on utilise le polybutadiène ou le polyisoprène, qui contiennent éventuellement jusqu'à 30 % en poids d'autres unités comonomères.

7.  Matières moulables selon l'une ou plusieurs des revendications 1 à 6, caractérisées en ce que le caoutchouc de polydiène possède une température de transition vitreuse se situant dans un domaine allant de -40 à -120°C.

8.  Matières moulables selon l'une ou plusieurs des revendications 1 à 7, caractérisées en ce que la teneur en caoutchouc du produit greffé se situe entre 50 et 85 % en poids.

9.  Matières moulables selon l'une ou plusieurs des revendications 1 à 8, caractérisées en ce que la ou les gaines greffées est ou bien sont formée(s) de Polyméthacrylate de méthyle et/ou de polymère de mélange de 20 à 80 % en poids d'acrylonitrile ou de méthacrylonitrile et de 80 à 20 % en poids d'acrylate, de méthacrylate ou de monomère vinylique.

10. Matières moulables selon l'une ou plusieurs des revendications 1 à 9, caractérisées en ce que la gaine greffée du composant B) est formée d'une couche et est constituée de polymères de styrène/acrylonitrile ou méthacrylate de méthyle.

11. Matières moulables selon l'une ou plusieurs des revendications 1 à 9, caractérisées en ce que la gaine greffée est formée de deux ou de plusieurs couches, la couche interne étant formée de polystyrène (réticulé) et la couche externe étant formée de polymères de styrène/méthacrylate de méthyle ou méthacrylate de méthyle (réticulé).

12. Matières moulables selon l'une ou plusieurs des revendications 1 à 11, caractérisées en ce que le produit greffé B) a été préparé par mélange d'un latex de caoutchouc a et d'un latex de caoutchouc b) et ensuite par polymérisation de greffage avec des monomères vinyliques.

13. Matières moulables selon l'une ou plusieurs des revendications 1 à 12, caractérisées en ce qu'elles contiennent, comme additifs classiques, des stabilisants pour l'oxydation.

14. Utilisation de matières moulables selon la revendication 1, pour la préparation de pièces moulées.

15. Utilisation selon la revendication 14, caractérisée en ce que des profilés, des plaques, des films, des tubes, des pièces mécaniques et des pièces accessoires pour automobiles sont préparés.

**Revendications pour l'Etat contractant suivant : ES**

1. Procédé de préparation d'une matière moulable thermoplastique, caractérisé en ce qu'on mélange intensivement

    A. 50 à 95 % en poids de polyoxyméthylène

    B. 5 à 50 % en poids d'un copolymère greffé à élasticité caoutchouteuse, qui présente une repartition de taille de particule bimodale,

    à chaque fois rapporté à la somme des composants A) et B) et éventuellement des additifs classiques, le composant B) étant constitué

    $\alpha$) d'une âme à élasticité caoutchouteuse, au moins partiellement réticulée, à base d'au moins un polydiène ayant un diamètre de particules compris entre 0,05 et 1 $\mu$m, à base de caoutchoucs suivants :

    a) 15 à 85 % en poids (rapportés à la somme a + b) d'un latex de caoutchouc ayant un diamètre de particules $d_{50}$ compris entre 0,05 et 0,2 $\mu$m, et

    b) 85 à 15 % en poids (rapportés à la somme a + b) d'un latex de caoutchouc ayant un diamètre de particules $d_{50}$ compris entre 0,2 et 1 $\mu$m, étant entendu que

        1) le diamètre de particules $d_{50}$ (caoutchouc b) est supérieur d'un facteur compris entre 1,5 et 8 au diamètre de particules $d_{50}$ (caoutchouc a),

        2) le quotient $Q = (d_{90} - d_{10})/d_{50}$ vaut 2 au maximum pour chacun des caoutchoucs et

        3) la différence $d_{10}$ (b) - $d_{90}$ (a) va de 0,01 jusqu'à moins 0,10, et

    $\beta$) d'au moins d'une gaine greffée dure formée d'au moins un monomère vinylique de la famille des styrène, (méth)acrylonitrile et méthacrylate de méthyle.

2. Procédé selon la revendication 1, caractérisé en ce que le composant B) possède de manière prédominante, de préférence jusqu'à 70 %, une structure âme-gaine (en couches).

3. Procédé selon la revendication 1 ou 2, caractérisé en ce que l'âme est monophasique.

4. Procédé selon l'une ou plusieurs des revendications 1 à 3, caractérisé en ce que l'âme constitue 40 à 95 % en poids des particules du composant B) et la partie de la gaine est de 5 à 60 % en poids.

5. Procédé selon l'une ou plusieurs des revendications 1 à 4, caractérisé en ce que le copolymère greffé possède une teneur en gel supérieure ou égale à 70 %.

6. Procédé selon l'une ou plusieurs des revendications 1 à 5, caractérisé en ce que, comme polydiène, on utilise le polybutadiène ou le polyisoprène, qui contiennent éventuellement jusqu'à 30 % en poids d'autres unités comonomères.

7. Procédé selon l'une ou plusieurs des revendications 1 à 6, caractérisé en ce que le caoutchouc de polydiène possède une température de transition vitreuse se situant dans un domaine allant de -40 à -120 °C.

16

**8.** Procédé selon l'une ou plusieurs des revendications 1 à 7, caractérisé en ce que la teneur en caoutchouc du produit greffé se situe entre 50 et 85 % en poids.

**9.** Procédé selon l'une ou plusieurs des revendications 1 à 8, caractérisé en ce que la ou les gaines greffées est ou bien sont formée(s) de polyméthacrylate de méthyle et/ou de polymère de mélange de 20 à 80 % en poids d'acrylonitrile ou de méthacrylonitrile et de 80 à 20 % en poids d'acrylate, de méthacrylate ou de monomères vinyliques.

**10.** Procédé selon l'une ou plusieurs des revendications 1 à 9, caractérisé en ce que la gaine greffée du composant B) est formée d'une couche et est constituée de polymères de styrène/acrylonitrile ou méthacrylate de méthyle.

**11.** Procédé selon l'une ou plusieurs des revendications 1 à 9, caractérisé en ce que la gaine greffée est formée de deux ou de plusieurs couches, la couche interne étant formée de polystyrène (réticulé) et la couche externe étant formée de polymères de styrène/méthacrylate de méthyle ou méthacrylate de méthyle (réticulé).

**12.** Procédé selon l'une ou plusieurs des revendications 1 à 11, caractérisé en ce que le produit greffé B) a été préparé par mélange d'un latex de caoutchouc a et d'un latex de caoutchouc b) et ensuite par polymérisation de greffage avec des monomères vinyliques.

**13.** Procédé selon l'une ou plusieurs des revendications 1 à 12, caractérisé en ce qu'elle contient, comme additifs classiques, des stabilisants pour l'oxydation.

**14.** Procédé selon l'une ou plusieurs des revendications 1 à 13, caractérisé en ce que le mélange des composants se fait à des températures supérieures au point de fusion du composant A).

**15.** Procédé selon la revendication 14, caractérisé en ce que le mélange se fait à une température comprise entre environ 160 et 250°C, de préférence entre 180 et 220°C.

**16.** Utilisation de la matière moulable selon la revendication 1, pour la préparation de pièces moulées.

**17.** Utilisation selon la revendication 16, caractérisée en ce que des profilés, des plaques, des films, des tubes, des pièces mécaniques et des pièces accessoires pour automobiles sont préparés.